# FASCICULE DE BREVET EUROPEEN

(11) **EP 1 510 086 B1**
(45) Date de publication et mention de la délivrance du brevet: **26.12.2007**
(21) Numéro de dépôt: 03749944.9
(22) Date de dépôt: 12.05.2003
(51) Int. Cl.: H04Q 7/22

(54) **SYSTEME ET PROCEDE DE GESTION D'ACCES A UN CONTENU NUMERIQUE PROTEGE TRANSMIS VERS UN TERMINAL MOBILE**
SYSTEM UND VERFAHREN ZUR VERWALTUNG DES ZUGRIFFS AUF EINEN GESCHÜTZTEN, ZU EINEM MOBILEN ENDGERÄT GESENDETEN DIGITALEN INHALT
SYSTEM AND METHOD FOR MANAGING ACCESS TO A PROTECTED DIGITAL CONTENT TRANSMITTED TO A MOBILE TERMINAL

(30) Priorité: 13.05.2002 FR 0205859
(43) Date de publication de la demande: 02.03.2005
(73) Titulaire: Orange France, 92120 Montrouge (FR)
(72) Inventeur: COUREAU, Laurent, F-91420 Morangis (FR)
(74) Mandataire: de la Fouchardière, Marie-Noelle
(86) Numéro de dépôt international: PCT/FR2003/001452
(87) Numéro de publication internationale: WO 2003/096720

(56) Documents cités:
- EP-A- 0 562 890
- EP-A- 1 182 874
- WO-A-02/13028
- WO-A-99/52304
- US-A- 5 966 654

## Description

La présente invention concerne un système et un procédé de gestion d'accès à un contenu numérique protégé, transmis vers un terminal mobile.

L'invention s'applique plus particulièrement à la gestion de la durée d'utilisation d'un contenu numérique protégé.

Ledit contenu numérique peut être de différentes natures, tels qu'un fichier numérique de musique, un livre électronique, un fichier numérique vidéo, un programme d'ordinateur ou bien une application informatique.

Le contenu numérique peut être protégé par exemple par une méthode de chiffrement de données numériques, de manière à contrôler l'accès au contenu numérique et à en empêcher une lecture illicite.

Actuellement, lorsqu'un contenu numérique est transmis par un serveur de diffusion de contenus vers un terminal de réception, les droits d'utilisation dudit contenu numérique sont soit transmis vers ledit terminal de réception par un serveur de gestion de droits d'utilisation, soit transmis lors de chaque utilisation dudit contenu numérique.

Les droits d'utilisation d'un contenu numérique permettent de contrôler les possibilités d'accès audit contenu numérique, par exemple en indiquant un nombre autorisé de lecture ou bien en définissant une durée d'utilisation dudit contenu numérique.

En général, le terminal de réception du contenu numérique est équipé d'une horloge interne audit terminal. Si la gestion de la durée d'utilisation du contenu numérique se fait à partir du terminal de réception, l'utilisateur peut intervenir sur ladite horloge interne. Il sera tenté de modifier les indications de celle-ci, de manière à bénéficier de droits illicites d'utilisation.

D'autre part, les systèmes, avec gestion de la durée par le terminal de réception, n'évitent pas une attaque de type "intrusion au milieu" (man in the middle) dans laquelle un utilisateur pirate se fait passer pour ledit serveur de gestion de droits d'utilisation et envoie une horloge falsifiée autorisant l'accès illicite à des contenus protégés.

Actuellement, si un contrôle de la durée d'utilisation du contenu est réalisé par le serveur de gestion de droits d'utilisation, une connexion du terminal de réception doit être établie avec celui-ci, ce qui retarde l'accès au contenu à chaque utilisation. Le document cité WO-99-52304 divulgue un système de gestion d'accès dans lequel un message de mise à jour du droit d'utilisation est transmis par le système vers le terminal mobile au moment de la registration du terminal dans une nouvelle celle ou en conséquence d'une requête de service envoyée par le terminal mobile (service-on-demand).

La connexion au serveur de gestion de droits, au moment de chaque utilisation dudit contenu numérique, impose à l'utilisateur des délais de connexion avant l'utilisation du contenu numérique. En général, cette connexion fera l'objet d'une facturation, qui augmente les coûts d'utilisation du contenu numérique pour l'utilisateur.

Enfin, ces connexions répétées vont accroître le trafic sur le réseau cellulaire pour les mobiles vers le serveur de gestion de droits d'utilisation, avec des risques d'encombrement pour accéder audit serveur de gestion.

Du fait de l'essor des transactions concernant le commerce électronique, un contrôle régulier et précis des droits d'utilisation est nécessaire, de manière à éviter les contestations de l'utilisateur au moment de la facturation par le fournisseur du service.

Aujourd'hui, le besoin se fait sentir de réaliser la gestion de la durée d'accès à un contenu numérique protégé de façon plus fiable qu'à partir de l'horloge interne du terminal de réception.

Aussi, le problème technique à résoudre par l'objet de la présente invention est de proposer un système et un procédé de gestion d'accès à un contenu numérique protégé, stocké dans au moins un serveur de diffusion de contenus, transmis vers un terminal mobile raccordé à un réseau cellulaire pour des mobiles, qui permettrait de remédier aux inconvénients des systèmes existants en évitant, au moment de l'utilisation dudit contenu numérique, une connexion de l'utilisateur avec un serveur de gestion de droits pour gérer la durée d'utilisation dudit contenu numérique.

La solution au problème technique posé consiste, selon la présente invention, en ce que, un droit d'utilisation étant transmis audit terminal mobile par au moins un serveur de gestion de droits d'utilisation, ledit système de gestion est apte à stocker au moins une copie dudit droit d'utilisation dans ledit serveur de gestion de droits d'utilisation et apte à transmettre vers ledit terminal mobile au moins un message de commande de mise à jour dudit droit d'utilisation du contenu numérique.

De la même manière, le procédé de gestion d'accès à un contenu numérique protégé, stocké dans au moins un serveur de diffusion de contenus, transmis vers un terminal mobile raccordé à un réseau cellulaire pour des mobiles, conforme à l'invention, est remarquable en ce qu'il comporte les étapes consistant à : - transmettre ledit contenu numérique dudit serveur de diffusion de contenus vers ledit terminal mobile ; - transmettre au moins un droit d'utilisation, associé audit contenu numérique transmis, en provenance d'au moins un serveur de gestion de droits d'utilisation vers ledit terminal mobile ; - stocker dans au moins une base de données au moins une copie dudit droit d'utilisation transmis ; - mettre en mémoire au moins la durée de validité dudit droit d'utilisation associée au contenu numérique transmis ; - transmettre à partir dudit serveur de gestion de droits d'utilisation vers ledit terminal mobile au moins un message de commande de mise à jour dudit droit d'utilisation du contenu numérique.

Ainsi, le système et le procédé de gestion d'accès à un contenu numérique protégé à partir d'un terminal mobile, conformes à l'invention, permettent la gestion centralisée en un point unique, dans ledit serveur de gestion de droits d'utilisation, de la durée d'utilisation dudit contenu numérique.

Selon l'invention, ledit message de mise à jour dudit droit d'utilisation est transmis sans demande de connexion dudit terminal mobile vers ledit serveur de gestion de droits d'utilisation.

Conformément à l'invention, ledit message de mise à jour dudit droit d'utilisation est transmis vers ledit terminal mobile par un centre de gestion de messages électroniques dudit réseau cellulaire pour des mobiles.

Conformément à l'invention, ledit message de mise à jour dudit droit d'utilisation est un message de commande, transmis sans intervention de l'utilisateur dudit terminal mobile.

Ledit centre de gestion de messages électroniques établit une connexion vers ledit terminal mobile pour transmettre ledit message de mise à jour dudit droit d'utilisation.

Ledit message de mise à jour dudit droit d'utilisation est un message de commande, qui est transparent pour l'utilisateur et ne donne lieu à aucune facturation pour celui-ci. L'utilisateur n'a aucune action à accomplir et ne peut intervenir sur l'exécution dudit message.

La description qui va suivre en regard du dessin annexé, donné à titre d'exemple non limitatif, fera bien comprendre en quoi consiste l'invention, comment elle peut être réalisée et d'autres caractéristiques de l'invention en ressortiront.

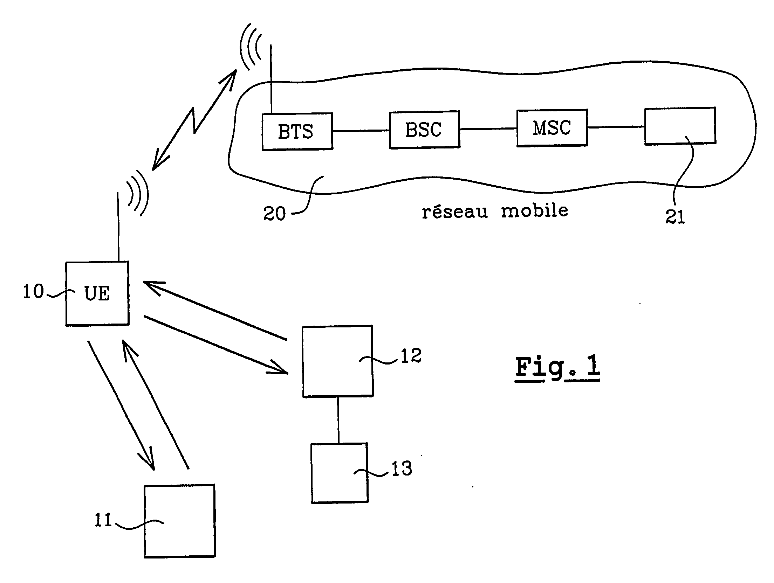

La figure 1 est un schéma de l'architecture générale du système de gestion d'accès à un contenu numérique protégé, conforme à l'invention.

Pour simplifier la description, l'abonné au réseau de télécommunications mobiles est indiqué comme un terminal mobile 10, mais il peut être de différentes natures, par exemple un serveur ou bien un terminal de communication mobile, un ordinateur personnel de type PC ou bien un poste de télévision, et par un équipement d'abonné 10 appelé UE (User Equipment) sur la figure 1.

Quel que soit le terminal 10 utilisé, celui-ci est relié à un réseau mobile public auquel l'utilisateur est abonné.

L'invention s'applique à tous les réseaux de communication utilisant des techniques identiques de transmission de messages de commande vers un terminal mobile.

Le terminal mobile 10 est raccordé à tout type de réseau cellulaire de communication pour des mobiles permettant la transmission de messages de commande vers un terminal mobile, par exemple un réseau mobile de type GSM (Global System for Mobile communications, soit système global pour les communications avec les mobiles) ou GPRS (General Packet Radio Service, soit service général de radiocommunication en mode paquet) ou UMTS (Universal Mobile Telecommunications System, soit système universel de télécommunications avec les mobiles).

Pour simplifier la description, les équipements du réseau cellulaire sont décrits avec les appellations concernant un réseau de type GSM.

L'utilisateur en possession d'un terminal mobile 10 accède à un contenu numérique protégé, ainsi qu'aux droits d'utilisation dudit contenu numérique pour une durée définie de temps, soit la durée T.

Ledit contenu numérique est accessible sur tout réseau de communication public ou privé, par exemple le réseau Internet.

Ledit contenu numérique peut être de différentes natures, tels qu'un fichier numérique de musique, un livre électronique, un fichier numérique vidéo, un programme d'ordinateur ou bien une application informatique.

Le serveur 11 de diffusion de contenus transmet le contenu numérique protégé vers le terminal 10 du demandeur.

Le contenu numérique peut être protégé par une méthode de chiffrement de toute nature et compatible avec l'application en place sur le terminal mobile 10 du demandeur, abonné au service de fourniture de contenus.

Le serveur 12 de gestion de droits d'utilisation transmet vers le terminal 10 les droits associés au contenu numérique transmis. Ces droits sont notamment une période d'utilisation définie.

En fonction des équipements, le serveur 11 de diffusion de contenus et le serveur 12 de gestion de droits d'utilisation peuvent être localisés ou non dans un même serveur.

Le serveur 12 de gestion de droits d'utilisation stocke, par exemple dans une base de données 13, une copie des droits transmis vers le terminal mobile 10, ainsi que le moment précis (date, heure, seconde, ...) auquel débutent lesdits droits d'utilisation et à partir duquel le contenu numérique est utilisable par le terminal 10.

En particulier, le serveur 12 de gestion met en mémoire la durée T de validité pendant laquelle le contenu numérique peut être consulté sur le terminal mobile 10.

La base de données 13 peut être physiquement incluse ou non dans le serveur 12 de gestion de droits d'utilisation.

L'utilisateur peut alors utiliser librement le contenu numérique pendant la durée T, en fonction par exemple d'autres droits d'utilisation tels qu'un nombre autorisé de lectures du contenu numérique.

A la fin du temps T, le serveur 12 de gestion de droits d'utilisation transmet au moins un message de mise à jour des droits d'utilisation, indiquant l'expiration de la durée prédéfinie.

Si nécessaire, un message peut également être transmis par avance, par exemple pour indiquer à l'utilisateur que la durée d'utilisation est proche de l'expiration.

Ledit message de mise à jour des droits transite par l'intermédiaire d'un centre 21 de gestion de messages électroniques du réseau mobile 20.

Par exemple, ledit message de mise à jour des droits, en provenance du serveur 12 de gestion des droits d'utilisation, est transmis par le service des messages courts appelé "SMS" (Short Message Service) ou par le service des messages multimédia "MMS" (Multimedia Message Service) ou "EMS" (Extented Message Service) ou par tout autre type de service des messages, supporté par le réseau mobile 20.

Ainsi, ledit centre 21 de gestion de messages électroniques est par exemple un centre des messages courts appelé "SMSC" (Short Message Service Center) ou bien un centre des messages multimédia appelé "MMSC" (Multimedia Message Service Center) ou tout autre centre de gestion de messages électroniques selon le type de réseau mobile.

De la même façon que pour tout autre message, le réseau mobile 20 transmet ledit message de mise à jour des droits d'utilisation vers le terminal mobile 10 par l'intermédiaire d'un centre de commutation du réseau mobile, soit "MSC" (Mobile Switching Center), puis d'un contrôleur de stations de base, soit "BSC" (Base Station Controller), et enfin d'une station de base, soit "BTS" (Base Transceiver Station) vers le terminal mobile 10.

Ledit message de mise à jour des droits d'utilisation est de type "message de commande" pour le terminal mobile 10.

A titre indicatif, avec un service des messages courts de type SMS, ledit message de commande est un message appelé SMS-OTA (Short Message Service - Over The Air), qui sert à la signalisation pour le réseau mobile 20.

Ledit message de commande est transmis à partir dudit centre 21 de gestion de messages électroniques vers ledit terminal mobile 10, sans intervention de l'utilisateur dudit terminal mobile 10. Par conséquent, il ne fait l'objet d'aucune facturation pour l'utilisateur dudit terminal mobile 10.

En effet, le terminal mobile 10 n'établit pas volontairement une connexion pour recevoir ledit message de mise à jour. De ce fait, Il est transparent pour l'utilisateur du terminal mobile 10, qui n'a aucune action à accomplir et qui ne peut intervenir sur l'exécution dudit message de mise à jour des droits d'utilisation.

De par la nature du message de commande transmis, ledit message de mise à jour des droits est caractérisé par le fait que l'utilisateur ne peut le refuser sur le terminal mobile 10.

Selon les cas, après réception dudit message de mise à jour des droits, lesdits droits d'utilisation sur le terminal 10 sont soit remis à jour, avec une durée d'utilisation nulle, soit effacés. De ce fait, le contenu numérique devient alors inutilisable sur le terminal 10.

## Revendications

1. Système de gestion d'accès à un contenu numérique protégé, stocké dans au moins un serveur (11) de diffusion de contenus, transmis vers un terminal mobile (10) raccordé à un réseau cellulaire (20) pour des mobiles, **caractérisé en ce que**, au moins une copie d'un droit d'utilisation étant stockée dans au moins un serveur (12) de gestion de droits d'utilisation, ledit système de gestion est apte à transmettre vers ledit terminal mobile (10) au moins un message de commande de mise à jour dudit droit d'utilisation du contenu numérique, sans demande de connexion dudit terminal mobile (10) vers ledit serveur (12) de gestion de droits d'utilisation.

2. Système de gestion d'accès à un contenu protégé, selon la revendication 1, **caractérisé en ce que** ledit message de mise à jour dudit droit d'utilisation est un message de commande, transmis sans intervention de l'utilisateur dudit terminal mobile (10).

3. Système de gestion d'accès à un contenu numérique protégé, selon l'une des revendications 1 ou 2, **caractérisé en ce que** ledit message de mise à jour dudit droit d'utilisation indique la fin de validité dudit droit d'utilisation du contenu numérique.

4. Système de gestion d'accès à un contenu protégé, selon l'une quelconque des revendications 1 à 3, **caractérisé en ce que** ledit message de mise à jour dudit droit d'utilisation est transmis vers ledit terminal mobile (10) par au moins un centre (21) de gestion de messages électroniques dudit réseau cellulaire (20) pour des mobiles.

5. Serveur (12) de gestion de droits d'utilisation associé à un système de gestion d'accès à un contenu numérique protégé, selon l'une quelconque des revendications 1 à 4, **caractérisé en ce qu'**il comprend au moins un moyen de transmission vers au moins un terminal mobile (10), un moyen de transmission vers au moins un centre (21) de gestion de messages électroniques dudit réseau cellulaire (20) pour des mobiles, un moyen de stockage d'au moins un droit d'utilisation de contenu numérique et un moyen d'émission d'au moins un message de commande de mise à jour dudit droit d'utilisation d'un contenu numérique, sans demande de connexion dudit terminal mobile (10).

6. Serveur (12) de gestion de droits d'utilisation associé à un système de gestion d'accès à un contenu numérique protégé, selon la revendication 5, **caractérisé en ce que** ledit moyen de stockage dudit serveur (12) de gestion de droits d'utilisation est au moins une base de données (13).

7. Procédé de gestion d'accès à un contenu numérique protégé, stocké dans au moins un serveur (11) de diffusion de contenus, transmis vers un terminal mobile (10) raccordé à un réseau cellulaire (20) pour des mobiles, **caractérisé en ce que** ledit procédé comporte les étapes consistant à :
- transmettre ledit contenu numérique dudit serveur (11) de diffusion de contenus vers ledit terminal mobile (10),
- transmettre au moins un droit d'utilisation, associé audit contenu numérique transmis, en provenance d'au moins un serveur (12) de gestion de droits d'utilisation vers ledit terminal mobile (10),
- stocker dans au moins une base de données (13) au moins une copie dudit droit d'utilisation transmis,
- mettre en mémoire au moins la durée de validité dudit droit d'utilisation associée au contenu numérique transmis,
- transmettre à partir dudit serveur (12) de gestion de droits d'utilisation vers ledit terminal mobile (10) au moins un message de commande de mise à jour dudit droit d'utilisation du contenu numérique, sans demande de connexion dudit terminal mobile (10).

## Claims

1. A system for managing access to protected digital content stored in a content broadcasting server (11) and transmitted to a mobile terminal (10) connected to a cellular mobile network (20), the system being **characterized in that**, a copy of a right of use being stored in a right-of-use management server (12), said management system is adapted to transmit to said mobile terminal (10) a control message updating said right to use the digital content without any request for a connection from said mobile terminal (10) to said right-of-use management server (12).

2. A system according to claim 1 for managing access to protected content, **characterized in that** said message updating said right of use is a control message transmitted without intervention by the user of said mobile terminal (10).

3. A system according to either claim 1 or claim 2 for managing access to protected digital content, **characterized in that** said message updating said right of use indicates the end of validity of said right to use the digital content.

4. A system according to any one of claims 1 to 3 for managing access to protected digital content, **characterized in that** said message updating said right of use is transmitted to said mobile terminal (10) by an electronic message management center of said cellular mobile network (20).

5. A server (12) for managing rights of use associated with a system for managing access to protected digital content according to any one of claims 1 to 4, **characterized in that** it comprises means for transmitting to a mobile terminal (10), means for transmitting to an electronic message management center (21) of said cellular mobile network (20), means for storing a right to use a digital content, and means of sending a control message updating said right to use a digital content with no request for connection of said mobile terminal (10).

6. A server (12) according to claim 5 for managing rights of use associated with a system for managing access to protected digital content, **characterized in that** said storage means of said right-of-use management server (12) comprise a database (13).

7. A method for managing access to protected digital content stored in a content broadcasting server (11) and transmitted to a mobile terminal (10) connected to a cellular mobile network (20), **characterized in that** said method comprises the steps of:
- transmitting said digital content from said content broadcasting server (11) to said mobile terminal (10),
- transmitting a right of use associated with the transmitted digital content from a right-of-use management server (12) to said mobile terminal (10),
- storing a copy of the transmitted right of use in a database (13),
- storing the validity time of said right of use associated with the transmitted digital content, and
- transmitting from said right-of-use management server (12) to said mobile terminal (10) a control message updating said right to use the digital content with no request for connection from said mobile terminal (10).

## Patentansprüche

1. System zur Verwaltung des Zugriffs auf einen in mindestens einem Inhaltsverbreitungsserver (11) gespeicherten geschützten digitalen Inhalt, der zu einem mobilen Endgerät (10) übertragen wird, das mit einem zellularen Netz (20) für Mobilstationen verbunden ist, **dadurch gekennzeichnet, dass**, da mindestens eine Kopie eines Benutzungsrechts in mindestens einem Benutzungsrecht-Verwaltungsserver (12) gespeichert ist, das Verwaltungssystem in der Lage ist, an das mobile Endgerät (10) mindestens eine Befehlsmitteilung zur Aktualisierung des Benutzungsrechts des digitalen Inhalts zu übertragen, ohne Verbindungsantrag vom mobilen Endgerät (10) zum Benutzungsrecht-Verwaltungsserver (12).

2. System zur Verwaltung des Zugriffs auf einen geschützten Inhalt nach Anspruch 1, **dadurch gekennzeichnet, dass** die Aktualisierungsmitteilung des Benutzungsrechts eine Befehlsmitteilung ist, die ohne Eingreifen des Benutzers des mobilen Endgeräts (10) übertragen wird.

3. System zur Verwaltung des Zugriffs auf einen geschützten digitalen Inhalt nach einem der Ansprüche 1 oder 2, **dadurch gekennzeichnet, dass** die Aktualisierungsmitteilung des Benutzungsrechts das Gültigkeitsende des Benutzungsrechts des digitalen Inhalts anzeigt.

4. System zur Verwaltung des Zugriffs auf einen geschützten Inhalt nach einem der Ansprüche 1 bis 3, **dadurch gekennzeichnet, dass** die Aktualisierungsmitteilung des Benutzungsrechts an das mobile Endgerät (10) von mindestens einem Verwaltungszentrum (21) elektronischer Mitteilungen des zellularen Netzes (20) für Mobilstationen übertragen wird.

5. Server (12) zur Verwaltung von Benutzungsrechten, der einem System zur Verwaltung des Zugriffs auf einen geschützten digitalen Inhalt zugeordnet ist, nach einem der Ansprüche 1 bis 4, **dadurch gekennzeichnet, dass** er mindestens ein Übertragungsmittel zu mindestens einem mobilen Endgerät (10), ein Übertragungsmittel zu mindestens einem Verwaltungszentrum (21) elektronischer Mitteilungen des zellularen Netzes (20) für Mobilstationen, ein Speichermittel mindestens eines Benutzungsrechts eines digitalen Inhalts und ein Sendemittel mindestens einer Befehlsmitteilung zur Aktualisierung des Benutzungsrechts eines digitalen Inhalts ohne Verbindungsantrag des mobilen Endgeräts (10) aufweist.

6. Server (12) zur Verwaltung von Benutzungsrechten, der einem System zur Verwaltung des Zugriffs auf einen geschützten digitalen Inhalt zugeordnet ist, nach Anspruch 5, **dadurch gekennzeichnet, dass** das Speichermittel des Verwaltungsservers (12) von Benutzungsrechten mindestens eine Datenbank (13) ist.

7. Verfahren zur Verwaltung des Zugriffs auf einen in mindestens einem Inhaltsverbreitungsserver (11) gespeicherten geschützten digitalen Inhalt, der zu einem mobilen Endgerät (10) übertragen wird, das mit einem zellularen Netz (20) für Mobilstationen verbunden ist, **dadurch gekennzeichnet, dass** das Verfahren die Schritte aufweist, die darin bestehen:
- den digitalen Inhalt vom Inhaltsverbreitungsserver (11) zum mobilen Endgerät (10) zu übertragen,
- mindestens ein dem übertragenen digitalen Inhalt zugeordnetes Benutzungsrecht, das von mindestens einem Benutzungsrecht-Verwaltungsserver (12) kommt, an das mobile Endgerät (10) zu übertragen,
- in mindestens einer Datenbank (13) mindestens eine Kopie des übertragenen Benutzungsrechts zu speichern,
- mindestens die Gültigkeitsdauer des dem übertragenen digitalen Inhalt zugeordneten Benutzungsrechts zu speichern,
- ausgehend von dem Benutzungsrecht-Verwaltungsserver (12) an das mobile Endgerät (10) mindestens eine Befehlsmitteilung zur Aktualisierung des Benutzungsrechts des digitalen Inhalts zu übertragen, ohne Verbindungsantrag des mobilen Endgeräts (10).
